# EUROPEAN PATENT APPLICATION

(11) **EP 4 596 795 A1**
(43) Date of publication of application: **06.08.2025**
(21) Application number: 23872442.1
(22) Date of filing: 27.09.2023
(51) Int. Cl.: E02F 3/43, E02F 9/00, E02F 9/22

(54) **WHEEL LOADER**

(30) Priority: 30.09.2022 JP 2022159014
(71) Applicant: Hitachi Construction Machinery Co., Ltd., Tokyo 110-0015 (JP)
(72) Inventor: TANAKA Tetsuji, Tsuchiura-shi, Ibaraki 300-0013 (JP); TAN Shugo, Tsuchiura-shi, Ibaraki 300-0013 (JP); NUKII Masaki, Tsuchiura-shi, Ibaraki 300-0013 (JP)
(74) Representative: MERH-IP Matias Erny Reichl Hoffmann Patentanwälte PartG mbB
(86) International application number: PCT/JP2023/035202
(87) International publication number: WO 2024/071220

(57) **Abstract**

In the wheel loader 1 equipped with a semi-automatic excavation mode function in which the controllers 5, 5A, 5B automatically control the travel drive device 3 and the cargo handling device 2 to assist the operator's operation, the semi-automatic excavation mode includes a first excavation mode in which the controllers 5, 5A, 5B do not limit the engine speed of the engine 30, and a second excavation mode in which the controllers 5, 5A, 5B limit the engine speed of the engine 30 so that the traction force by the travel drive device 3 is smaller than in the first excavation mode. In addition, the controllers 5, 5A, 5B switch between the first excavation mode and the second excavation mode based on the discharge pressure Pa of the hydraulic pump 33 immediately before the start of the excavation operation or the first to third mode selection switches 61 to 63.

## Description

### Technical Field

The present invention relates to a wheel loader for performing excavation work.

### Background Art

A wheel loader is equipped with a cargo handling device that excavates work objects such as earth and minerals and loads them onto dump trucks. The cargo handling device includes a lift arm attached to the front of the vehicle body, which can rotate vertically relative to the vehicle body, and a bucket attached to the tip of the lift arm, which can rotate vertically relative to the lift arm.

When performing excavation work, the operator needs to press the accelerator pedal to move forward at low speed while operating the control lever to raise the lift arm and scoop up the work object with the bucket. To reduce the operator's burden during such excavation work, some wheel loaders perform so-called "semi-automatic excavation," where the operations of the lift arm and bucket are automatically controlled by a controller.

For example, Patent Document 1 discloses a wheel loader equipped with a control device that controls the tilt operation (raising operation) of the bucket and the lifting operation of the lift arm. The control device initiates the tilt operation of the bucket based on the lift force of the lift arm and the vehicle speed, and ends the tilt operation based on the amount of increase in the lift force of the lift arm from the time the tilt operation is started. Additionally, the control device initiates the lifting operation of the lift arm based on the lift force of the lift arm, vehicle speed, and the angle of the lift arm, and ends the lifting operation based on the increase in the lift force or the angle of the lift arm from the start of the lifting operation.

### Citation List

### Patent Literature

Patent Literature 1, Japanese Patent No. 5700613

### Summary of the Invention

### Technical Problem

However, in the wheel loader described in Patent Document 1, the control device only focuses on controlling the timing of the start and end of the bucket's tilt operation and the lift arm's lifting operation. Therefore, the control device does not consider the balance between the traction force (driving force) and the digging force of the cargo handling device during excavation.

In a wheel loader, it is necessary to operate the cargo handling device to scoop up the work object while pushing it into the bucket by moving forward during excavation, making the balance between the traction force and the digging force of the cargo handling device important.

In the case of the wheel loader described in Patent Document 1, for example, during excavation, if the traction force is too large compared to the digging force required by the cargo handling device, the bucket may be pushed into the work object more than necessary, leading to an overloading condition. On the other hand, during excavation, if the traction force is too small compared to the digging force required by the cargo handling device, the vehicle body cannot move forward, making it difficult to push the bucket into the work object, which may result in the work object not entering the bucket easily. Adjusting the balance between the traction force and the digging force is left to the operator, requiring skill and making it a difficult operation for inexperienced operators. For example, an inexperienced operator may not consider reducing the traction force even when it is being output more than necessary, and may end up outputting even more traction force than needed. Even if the operator operates the cargo handling device when the traction force is output more than necessary, the overloading condition prevents smooth digging.

Therefore, the objective of the present invention is to provide a wheel loader capable of improving the balance between the traction force and the digging force of the cargo handling device when automatically controlling its operation during excavation.

### Solution To Problem

To achieve the above objective, the wheel loader of the present invention includes a vehicle body, an engine mounted on the vehicle body, a travel drive device driven by the engine to move the vehicle body, a travel operation device for operating the travel drive device, a hydraulic-driven cargo handling device attached to the vehicle body for excavating work objects, a hydraulic pump driven by the engine to supply hydraulic fluid to the drive part of the cargo handling device, a cargo operation device for operating the cargo handling device, a controller for controlling the engine, the travel drive device, and the cargo handling device, a mode selection device for selecting a normal mode in which the controller controls the cargo handling device based on operation signals output from the cargo operation device, and a semi-automatic excavation mode in which the controller automatically controls the travel drive device and the cargo handling device based on operation signals output from the travel operation device to assist the operator's operation; wherein the semi-automatic excavation mode includes a first excavation mode in which the controller does not limit the engine speed, and a second excavation mode in which the controller limits the engine speed so that the traction force by the travel drive device is smaller than in the first excavation mode. Additionally, the controller switches between the first excavation mode and the second excavation mode based on the state in which the semi-automatic excavation mode is selected by the mode selection device, or the state in which the semi-automatic excavation mode is selected by the mode selection device and the discharge pressure of the hydraulic pump immediately before the start of the excavation work.

### Advantageous Effects of Invention

According to the present invention, when automatically controlling the operation of the cargo handling device during excavation, it is possible to improve the balance between the traction force and the digging force of the cargo handling device. Problems, configurations, and effects other than those described above will be clarified by the following description of embodiments.

### Brief Description of Drawings

[FIG. 1] is an external side view showing an example configuration of a wheel loader according to each embodiment of the present invention.
[FIG. 2] is an explanatory diagram illustrating the flow of a series of cargo handling operations in a wheel loader.
[FIG. 3] is a system configuration diagram showing an example configuration of a drive system of a wheel loader in the first embodiment.
[FIG. 4] is a graph showing the relationship between vehicle speed and traction force for each speed stage.
[FIG. 5] is a functional block diagram showing the functions of the controller in the first embodiment.
[FIG. 6] is a flowchart showing the process flow of control by the semi-automatic excavation mode executed by the controller in the first embodiment.
[FIG. 7] is a functional block diagram showing the functions of the controller in the second embodiment.
[FIG. 8] is a flowchart showing the process flow of control by the semi-automatic excavation mode executed by the controller in the second embodiment
. [FIG. 9] is a functional block diagram showing the functions of the controller in the third embodiment.
[FIG. 10] is a flowchart showing the process flow of control by the semi-automatic excavation mode executed by the controller in the third embodiment.

### Description Of Embodiments

The wheel loader according to each embodiment of the present invention is a work vehicle that performs cargo handling operations by excavating work objects such as earth and minerals and loading them onto loading destinations such as dump trucks and hoppers.

### <Outline Configuration of Wheel Loader 1>

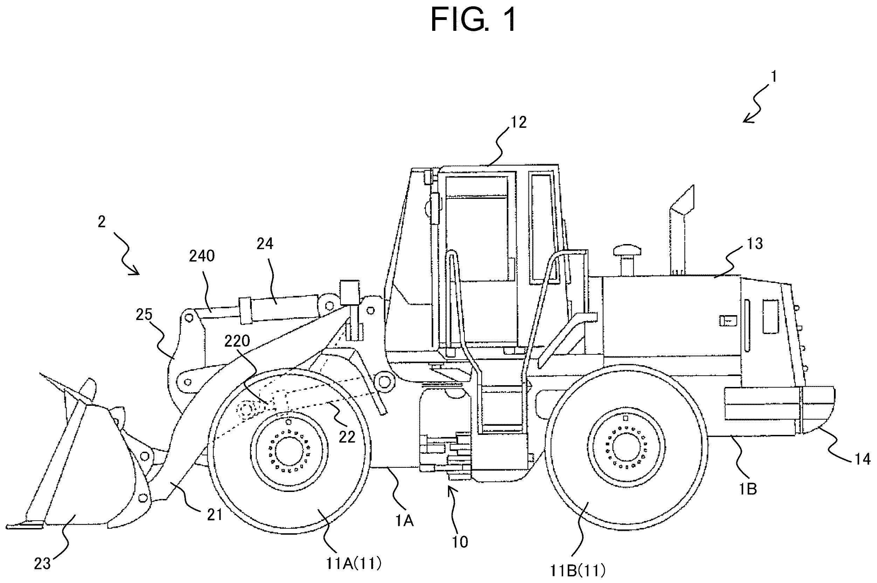

First, the outline of the wheel loader 1 according to each embodiment of the present invention will be described with reference to FIG. 1.

FIG. 1 is an external side view showing an example configuration of the wheel loader 1 according to each embodiment of the present invention.

The wheel loader 1 is an articulated work machine that steers by bending the vehicle body near the center. The front frame 1A, which constitutes the front part of the vehicle body, and the rear frame 1B, which constitutes the rear part of the vehicle body, are rotatably connected in the left-right direction by a center joint 10, and the front frame 1A bends left-right relative to the rear frame 1B by steering operation.

The vehicle body is provided with four wheels 11, with two wheels 11 as front wheels 11A on both sides of the front frame 1A, and the remaining two wheels 11 as rear wheels 11B on both sides of the rear frame 1B. In FIG. 1, only the left front wheel 11A and rear wheel 11B of the four wheels 11 are shown. A hydraulic-driven cargo handling device 2 is attached to the front part of the front frame 1A.

The cargo handling device 2 includes a lift arm 21 attached to the front frame 1A, two lift arm cylinders 22 for driving the lift arm 21, a bucket 23 attached to the tip of the lift arm 21, a bucket cylinder 24 for driving the bucket 23, and a bell crank 25 that is rotatably connected to the lift arm 21 to form a link mechanism with the bucket 23 and the bucket cylinder 24. The two lift arm cylinders 22 and the bucket cylinder 24 both correspond to the drive part of the cargo handling device 2. In FIG. 1, of the two lift arm cylinders 22 arranged in the left-right direction of the vehicle body, only the lift arm cylinder 22 on the left side is shown in dashed lines.

The two lift arm cylinders 22 each rotate the lift arm 21 vertically relative to the front frame 1A by extending and retracting the rod 220. The lift arm 21 rotates upward relative to the front frame 1A as the rod 220 of each lift arm cylinder 22 extends, and rotates downward relative to the front frame 1A as the rod 220 of each lift arm cylinder 22 retracts.

The bucket cylinder 24 rotates the bucket 23 in the vertical direction relative to the lift arm 21 by extending and retracting the rod 240. The bucket 23 rotates upward relative to the lift arm 21 when the rod 240 of the bucket cylinder 24 extends (tilt operation), and rotates downward relative to the lift arm 21 when the rod 240 of the bucket cylinder 24 retracts (dump operation).

The rear frame 1B is equipped with an operator's cab 12, a machinery room 13 that houses various equipment necessary for driving the wheel loader 1, and a counterweight 14 to maintain balance with the cargo handling device 2 to prevent the vehicle body from tipping over. In the rear frame 1B, the operator's cab 12 is positioned at the front, the counterweight 14 at the rear, and the machinery room 13 is located between the operator's cab 12 and the counterweight 14.

<Operation of Wheel Loader 1 during Cargo Handling Work>

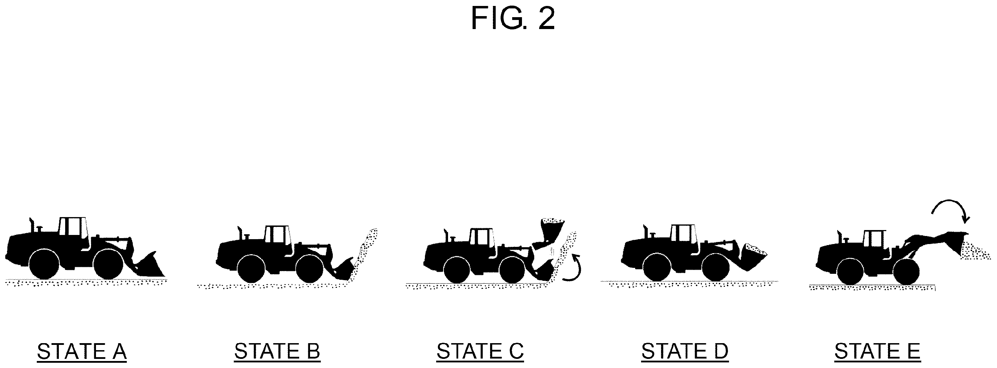

Next, the operation of the wheel loader 1 during cargo handling will be explained with reference to FIG. 2.

FIG. 2 is an explanatory diagram illustrating the flow of a series of cargo handling operations in the wheel loader 1.

In cargo handling operations, first, the wheel loader 1 moves forward towards the ground to be excavated while maintaining the bucket 23 in a ground-level horizontal position through the operator's travel operation (state A). Subsequently, the wheel loader 1 drives the bucket 23 into the ground through the operator's accelerator operation (state B).

Next, the wheel loader 1 excavates the ground by tilting the bucket 23 while raising the lift arm 21 (state C). This excavation requires both accelerator operation and cargo handling operation (operation of the cargo handling device 2). In the wheel loader 1, besides manual excavation where the operator performs both operations, semi-automatic excavation is possible where the operator only performs the accelerator operation, and the cargo handling operation is performed automatically without the operator's intervention.

Once excavation is complete, the wheel loader 1 transports the load contained in the bucket 23 to the loading destination through the operator's travel operation (state D). Then, the wheel loader 1 performs a dump operation with the bucket 23 to discharge the load at the loading destination through the operator's cargo handling operation (state E). The wheel loader 1 repeats the operations from state A to E shown in FIG. 2 until the specified amount of load is loaded at the destination.

Below, the specific system configuration of the wheel loader 1 equipped with a semi-automatic excavation function will be described for each embodiment.

### <First Embodiment>

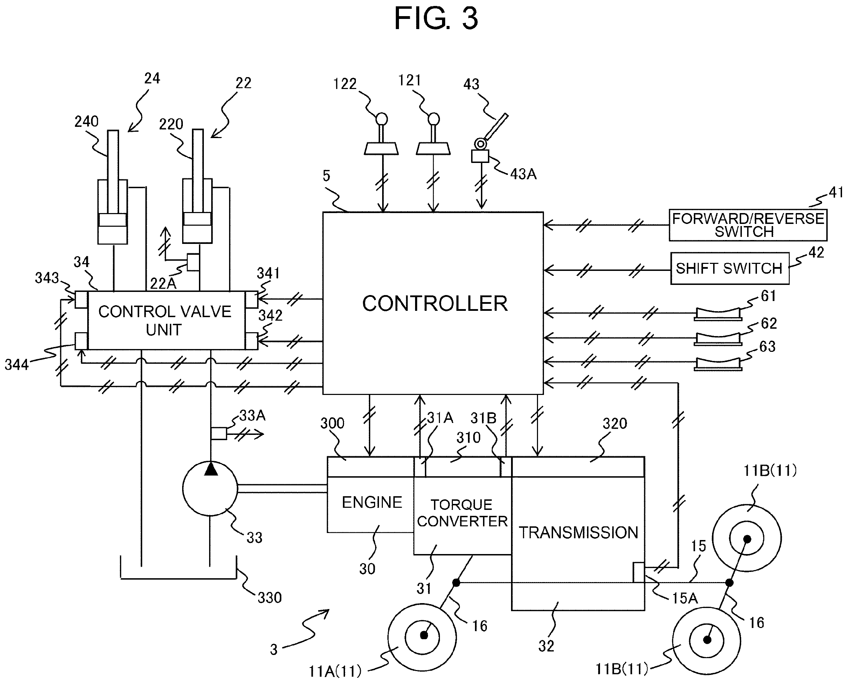

The system configuration according to the first embodiment of the present invention will be described with reference to FIGS. 3 to 6.

### (Drive system of wheel loader 1)

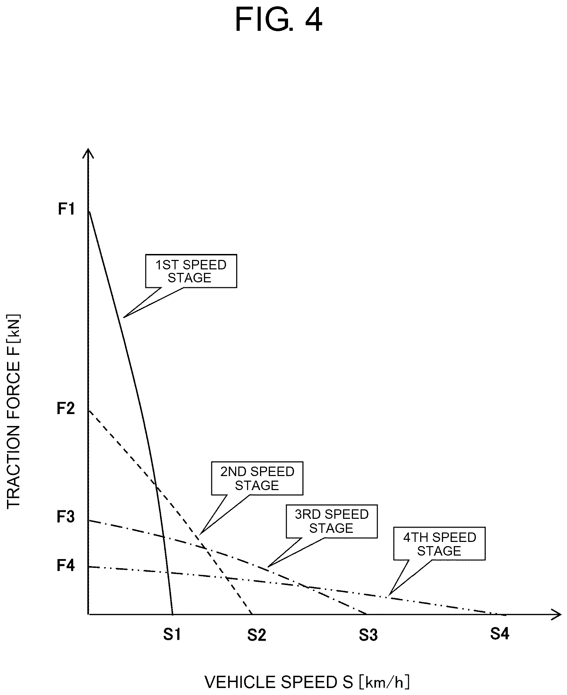

First, the drive system of the wheel loader 1 will be explained with reference to FIGS. 3 and 4.

FIG. 3 is a system configuration diagram showing an example of the drive system of the wheel loader 1 in the first embodiment. FIG. 4 is a graph showing the relationship between the vehicle speed S and the traction force F for each speed stage.

As shown in FIG. 3, in this embodiment, the travel of the vehicle body of the wheel loader 1 is controlled by a torque converter-type travel drive device 3. In the torque converter-type travel drive device 3, the driving force of the engine 30 is transmitted to multiple wheels 11 via the torque converter 31 (hereinafter referred to as "torque converter 31") and the transmission 32.

The torque converter 31 is a fluid clutch composed of an impeller, turbine, and stator, and has the function of amplifying the output torque relative to the input torque (torque transmitted from the engine 30), that is, a torque ratio (= output torque/input torque) of 1 or more. This torque ratio decreases as the torque converter speed ratio (= output shaft rotation speed/input shaft rotation speed), which is the ratio of the rotation speed of the input shaft to the output shaft of the torque converter 31, increases. As a result, the input torque is transmitted to the transmission 32 after changing the rotation speed of the engine 30.

The rotation speed of the input shaft of the torque converter 31 is detected by the first rotation speed sensor 31A attached to the input shaft of the torque converter 31. The first rotation speed sensor 31A detects the rotation speed of the engine 30 as the rotation speed of the input shaft of the torque converter 31.

The rotation speed of the output shaft of the torque converter 31 is detected by the second rotation speed sensor 31B attached to the output shaft of the torque converter 31. The second rotation speed sensor 31B detects the rotation speed after gear shifting in the torque converter 31 as the rotation speed of the output shaft of the torque converter 31.

The transmission 32 is composed of multiple gears, and the combination of multiple gears is controlled to achieve a gear ratio corresponding to one of the 1 to 4 speed stages shown in FIG. 4 during forward or reverse travel. As a result, the transmission 32 changes the torque, rotation speed, and rotation direction of the output shaft of the torque converter 31 and transmits it to multiple wheels 11.

The direction of travel of the wheel loader 1, that is, forward or reverse, is switched using the forward/reverse switch 41. Also, the selection of the speed stage of the transmission 32 (1 to 4 speed stages shown in FIG. 4) is performed using the shift switch 42. The forward/reverse switch 41 and the shift switch 42 are each provided in the operator's cab 12 (see FIG. 1).

As shown in FIG. 4, the speed stages of the transmission 32 are set such that the maximum vehicle speed is S1 in the 1st speed stage, S2, which is greater than S1, in the 2nd speed stage, S3, which is greater than S2, in the 3rd speed stage, and S4, which is greater than S3, in the 4th speed stage (S1<S2<S3<S4).

In this case, the traction force F corresponding to each of the 1 to 4 speed stages is F1 in the 1st speed stage, F2, which is smaller than F1, in the 2nd speed stage, F3, which is smaller than F2, in the 3rd speed stage, and F4, which is smaller than F3, in the 4th speed stage (F1>F2>F3>F4). Therefore, as the speed stage decreases, the maximum vehicle speed decreases, but on the other hand, the traction force F of the vehicle body increases. In FIG. 4, the 1st speed stage is shown with a solid line, the 2nd speed stage with a dashed line, the 3rd speed stage with a dash-dot line, and the 4th speed stage with a double-dash line.

The 1st speed stage is the lowest speed stage of the transmission 32 and is mainly selected during operations requiring traction force, such as excavation work or climbing work. As shown in FIG. 4, the maximum vehicle speed (=S1) in the 1st speed stage is the slowest among the 1 to 4 speed stages, but on the other hand, the traction force F (=F1) is the largest among the 1 to 4 speed stages.

The 2nd speed stage is set one speed stage higher than the lowest speed stage of the transmission 32 and is mainly selected during loading operations. As shown in FIG. 4, the maximum vehicle speed (=S2) in the 2nd speed stage is faster than in the 1st speed stage, and the traction force F (=F2) is significantly smaller than in the 1st speed stage.

The 3rd and 4th speed stages correspond to medium to high speed stages and are mainly selected during transport operations. As shown in FIG. 4, the maximum vehicle speed (=S3) in the 3rd speed stage is faster than in the 2nd speed stage, and the traction force F (=F3) is smaller than in the 2nd speed stage. The maximum vehicle speed (=S4) in the 4th speed stage is even faster than in the 3rd speed stage, and the traction force F (=F4) is even smaller than in the 3rd speed stage.

When the wheel loader 1 is traveling, the operator first depresses the accelerator pedal 43 provided in the operator's cab 12. As a result, the engine 30 rotates, and the input shaft of the torque converter 31 rotates along with the rotation of the engine 30. The accelerator pedal 43 corresponds to a travel operation device for operating the travel drive device 3.

Then, the output shaft of the torque converter 31 rotates according to the set torque converter speed ratio, and the output torque from the torque converter 31 is transmitted to multiple wheels 11 via the transmission 32, propeller shaft 15, and axle 16, allowing the wheel loader 1 to travel. The vehicle speed of the wheel loader 1 is detected as the rotation speed of the propeller shaft 15 by the vehicle speed sensor 15A attached to the propeller shaft 15.

The engine 30, torque converter 31, and transmission 32 are each controlled based on command signals output from the controller 5.

The controller 5 outputs a command signal related to the target engine speed to the engine control unit 30A. The engine 30 is controlled according to the command signal related to the target engine speed obtained by the engine control unit 30A. The target engine speed is proportional to the amount of depression of the accelerator pedal 43 and increases as the amount of depression of the accelerator pedal 43 increases. The amount of depression of the accelerator pedal 43 is detected by the depression amount sensor 43A attached to the accelerator pedal 43.

The controller 5 sets the torque converter speed ratio based on the input shaft rotation speed RS1 of the torque converter 31 detected by the first rotation speed sensor 31A and the output shaft rotation speed RS2 of the torque converter 31 detected by the second rotation speed sensor 31B, and outputs a command signal related to the set torque converter speed ratio to the torque converter control unit 310. The torque converter 31 is controlled according to the command signal related to the torque converter speed ratio obtained by the torque converter control unit 310.

The controller 5 selects a combination of multiple gears within the transmission 32 based on the direction of travel switched by the forward/reverse switch 41 and the speed stage selected by the shift switch 42, and outputs a command signal related to the selected combination of multiple gears to the transmission control unit 320 (hereinafter referred to as "TM control unit 320"). The transmission 32 is controlled according to the command signal related to the combination of multiple gears obtained by the TM control unit 320.

In the wheel loader 1, the operation of the cargo handling device 2 is controlled by a hydraulically driven cargo handling drive system. In the cargo handling drive system, the hydraulic oil discharged from the hydraulic pump 33 is supplied to each of the two lift arm cylinders 22 and the bucket cylinder 24 via the control valve unit 34, thereby operating the lift arm 21 and the bucket 23 respectively. In Figure 3, for simplification, only one of the two lift arm cylinders 22 is shown.

The hydraulic pump 33 is driven by the engine 30 and supplies the hydraulic oil sucked from the hydraulic oil tank 330 to each of the two lift arm cylinders 22 and the bucket cylinder 24. In this embodiment, the hydraulic pump 33 is a fixed displacement type hydraulic pump, but it is not limited to this and may be a variable displacement type hydraulic pump where the displacement volume is controlled according to the tilt angle. The discharge pressure Pa of the hydraulic pump 33 is detected by the discharge pressure sensor 33A provided on the discharge side of the hydraulic pump 33.

In this embodiment, the control valve unit 34 controls the flow (direction and flow rate) of hydraulic oil supplied from the hydraulic pump 33 to each of the two lift arm cylinders 22 and the bucket cylinder 24 based on the operation amount of the control levers 121, 122 as cargo handling operating devices for operating the cargo handling device 2, or based on automatic control by the controller 5.

Although not shown in Figure 3, the control valve unit 34 includes a control valve that controls the flow of hydraulic oil supplied from the hydraulic pump 33 to each of the two lift arm cylinders 22, and a control valve that controls the flow of hydraulic oil supplied from the hydraulic pump 33 to the bucket cylinder 24. In the following description, of the control levers 121, 122, the control lever 121 is for operating the lift arm 21, and the control lever 122 is for operating the bucket 23.

Each control valve of the control valve unit 34 is acted upon by the pilot pressure generated according to the operation amount of each of the control levers 121, 122. When pilot pressure acts on each control valve, the internal spool strokes according to the magnitude of the pilot pressure. As a result, the flow of hydraulic oil supplied from the hydraulic pump 33 to each of the two lift arm cylinders 22 and the bucket cylinder 24 is switched.

For example, when the control valve on the side of the two lift arm cylinders 22 switches to a position where the hydraulic pump 33 is connected to the bottom chamber of the two lift arm cylinders 22, and the hydraulic oil tank 330 is connected to the rod chamber of the two lift arm cylinders 22, the rods 220 of the two lift arm cylinders 22 extend, and the lift arm 21 rotates upward relative to the vehicle body.

On the other hand, when the control valve on the side of the two lift arm cylinders 22 switches to a position where the hydraulic pump 33 is connected to the rod chamber of the two lift arm cylinders 22, and the hydraulic oil tank 330 is connected to the bottom chamber of the two lift arm cylinders 22, the rods 220 of the two lift arm cylinders 22 shrink, and the lift arm 21 rotates downward relative to the vehicle body.

Note that on the bottom chamber side of one of the lift arm cylinders 22, a bottom pressure sensor 22A is provided to detect the bottom pressure as the cylinder pressure applied to the lift arm cylinder 22.

Similarly, when the control valve on the side of the bucket cylinder 24 switches to a position where the hydraulic pump 33 is connected to the bottom chamber of the bucket cylinder 24, and the hydraulic oil tank 330 is connected to the rod chamber of the bucket cylinder 24, the rod 240 of the bucket cylinder 24 extends, and the bucket 23 performs a tilt operation.

On the other hand, when the control valve on the side of the bucket cylinder 24 switches to a position where the hydraulic pump 33 is connected to the rod chamber of the bucket cylinder 24, and the hydraulic oil tank 330 is connected to the bottom chamber of the bucket cylinder 24, the rod 240 of the bucket cylinder 24 shrinks, and the bucket 23 performs a dump operation.

The pilot pressure acting on the control valve unit 34 is controlled by the first to fourth solenoid valves 341 to 344. In the following, the first solenoid valve 341 and the second solenoid valve 342 control the pilot pressure acting on the control valve on the side of the two lift arm cylinders 22, and the third solenoid valve 343 and the fourth solenoid valve 344 control the pilot pressure acting on the control valve on the side of the bucket cylinder 24.

For example, when the operator operates the control lever 121 of the lift arm 21, the operation direction and operation amount are input to the controller 5 as a pilot signal. The controller 5 generates a control signal based on the acquired pilot signal and outputs it to each of the first solenoid valve 341 and the second solenoid valve 342.

For example, when the operator operates the control lever 121 of the lift arm 21, the operation direction and operation amount are input to the controller 5 as a pilot signal. The controller 5 generates a control signal based on the acquired pilot signal and outputs it to each of the third solenoid valve 343 and the fourth solenoid valve 344.

In this embodiment, the wheel loader 1 is equipped with various modes for automatically controlling each device by the controller 5, in addition to the control of each device based on manual operation by the operator, for the purpose of improving the efficiency of excavation work and fuel efficiency.

Specifically, the wheel loader 1 is equipped with a "travel mode" in which the controller 5 automatically controls the speed stage during excavation, and a "work mode" in which the controller 5 automatically controls the engine speed of the engine 30 according to the required fuel efficiency. In addition, when performing the semi-automatic excavation, the wheel loader 1 is equipped with a "semi-automatic excavation mode" in which the controller 5 automatically controls the travel drive device 3 and the cargo handling device 2 based on the operation signal output from the accelerator pedal 43 to assist the operator's operation.

The travel mode has, as setting modes, a first auto mode that automatically reduces the speed stage during excavation to one speed stage, and a second auto mode that automatically reduces the speed stage during excavation to only two speed stages. The operator's cabin 12 is provided with a first mode selection switch 61 for selecting the first auto mode, the second auto mode, and the off of the travel mode. The information related to the mode selected by the first mode selection switch 61 (first auto mode, second auto mode, or mode off) is input to the controller 5 as a mode signal.

The work mode has, as setting modes, an STD mode that limits the engine speed of the engine 30 for fuel-efficient operation, and a P mode that does not limit the engine speed of the engine 30. The operator's cabin 12 is provided with a second mode selection switch 62 for selecting the STD mode and the P mode. The information related to the mode selected by the second mode selection switch 62 (STD mode or P mode) is input to the controller 5 as a mode signal. In the work mode, since the P mode corresponds to the off of the engine speed limitation (STD mode) of the engine 30, the second mode selection switch 62 is not provided with an off for the work mode.

In the travel mode and work mode, the operation of the cargo handling device 2 is controlled based on the operation amount of the control levers 121, 122. That is, when the travel mode is selected by the first mode selection switch 61, or when the work mode is selected by the second mode selection switch 62, the operation of the cargo handling device 2 is manual operation by the operator. Thus, both the travel mode and the work mode correspond to the normal mode in which the operation of the cargo handling device 2 is controlled based on the operation amount of the control levers 121, 122.

The semi-automatic excavation mode is a mode in which the controller 5 automatically controls the engine speed of the engine 30 and the speed stage of the transmission 32 according to the specific gravity and moisture content of the work object, and has, as setting modes, a heavy excavation mode as the first excavation mode and a light excavation mode as the second excavation mode.

The heavy excavation mode is a setting mode that combines the first auto mode in the travel mode and the P mode in the work mode, where the controller 5 automatically reduces the speed stage of the transmission 32 during excavation to the lowest speed stage, which is one speed stage, and does not limit the engine speed of the engine 30.

On the other hand, the light excavation mode is a setting mode that combines the second auto mode in the travel mode and the STD mode in the work mode. In this mode, the controller 5 automatically reduces the speed stage of the transmission 32 to only up to stages during excavation, and it limits the engine 30's speed so that the traction ability by the travel drive device 3 is smaller than in the heavy excavation mode.

The heavy excavation mode is selected when the specific gravity or moisture content of the work object is greater than in the light excavation mode, that is, when the maximum possible traction force is required. For example, the heavy excavation mode is selected when excavating work objects such as clayey soil with a specific gravity of about 2.0 [t/m3] or gravel with a specific gravity of about 2.5 [t/m3], or when excavating work objects that are wet due to rain.

The light excavation mode is selected when the specific gravity or moisture content of the work object is smaller than in the heavy excavation mode, meaning less traction force is required. For example, the light excavation mode is selected when excavating work objects such as coal with a specific gravity of about 1.3 [t/m3] or gravel with a specific gravity of about 1.7 [t/m3], or when excavating work objects that have dried due to evaporation of internal moisture.

If the work object is relatively heavy, such as clay or ore, or is in a wet state, and the traction force is too small compared to the digging force required by the cargo handling device 2 during excavation, the vehicle body cannot move forward, making it difficult to push the bucket 23 into the work object, and the work object becomes difficult to load into the bucket 23. Therefore, in such cases, by selecting the heavy excavation mode to increase the traction force of the wheel loader 1, it becomes possible to move the vehicle body forward and push the work object into the bucket 23.

On the other hand, if the work object is relatively light, such as coal or gravel, or is in a dry state, and the traction force is too large compared to the digging force required by the cargo handling device 2 during excavation, the bucket 23 may be pushed into the work object more than necessary, resulting in overloading the bucket 23 with the work object. Furthermore, if the bucket 23 is pushed deeply into the work object (natural ground), the digging force of the cargo handling device 2 may be insufficient, and the wheel loader 1 may not be able to lift the bucket 23.

Therefore, in such cases, by selecting the light excavation mode to reduce the traction force of the wheel loader 1, it becomes possible to prevent overloading the bucket 23 with the work object. Additionally, in this case, by minimizing the traction force of the wheel loader 1, fuel efficiency can also be improved.

In this way, in the semi-automatic excavation mode, unlike the travel mode and work mode, the operation of the cargo handling device 2 is automatically controlled by the controller 5 according to the specific gravity and moisture content of the work object.

Specifically, when the semi-automatic excavation mode is selected via the third mode selection switch 63, and excavation work has started, the controller 5 generates control signals based on the selected setting mode (heavy excavation mode or light excavation mode) and outputs them to each of the first to fourth solenoid valves 341 to 344. As a result, the lift arm 21 and bucket 23 are automatically controlled to operate based on the heavy excavation mode or light excavation mode, regardless of the operation of the control levers 121, 122.

It should be noted that the semi-automatic excavation mode does not necessarily have to be limited to only the two modes of heavy excavation mode and light excavation mode. For example, if the wheel loader 1 handles a wide variety of work objects, it may have three or more setting modes corresponding to each specific gravity.

The cab 12 is equipped with a third mode selection switch 63 to turn on either the heavy excavation mode or light excavation mode in the semi-automatic excavation mode, as well as to turn off the semi-automatic excavation mode. The information related to the mode selected by the third mode selection switch 63 (heavy excavation mode, light excavation mode, or mode off) is input to the controller 5 as a mode signal.

The first mode selection switch 61, second mode selection switch 62, and third mode selection switch 63 are one aspect of the mode selection device for selecting the semi-automatic excavation mode and the normal mode. In this embodiment, the mode selection device is composed of three mode selection switches 61 to 63, but it is not limited to this, and it may be possible to select the travel mode, work mode, and automatic excavation mode with a single device.

Also, in this embodiment, the third mode selection switch 63 is an input device capable of selecting the heavy excavation mode and light excavation mode, but it is not limited to this and may be used to select only the semi-automatic excavation mode (on and off). This will be explained in the second and third embodiments.

### (Functional Configuration of Controller 5)

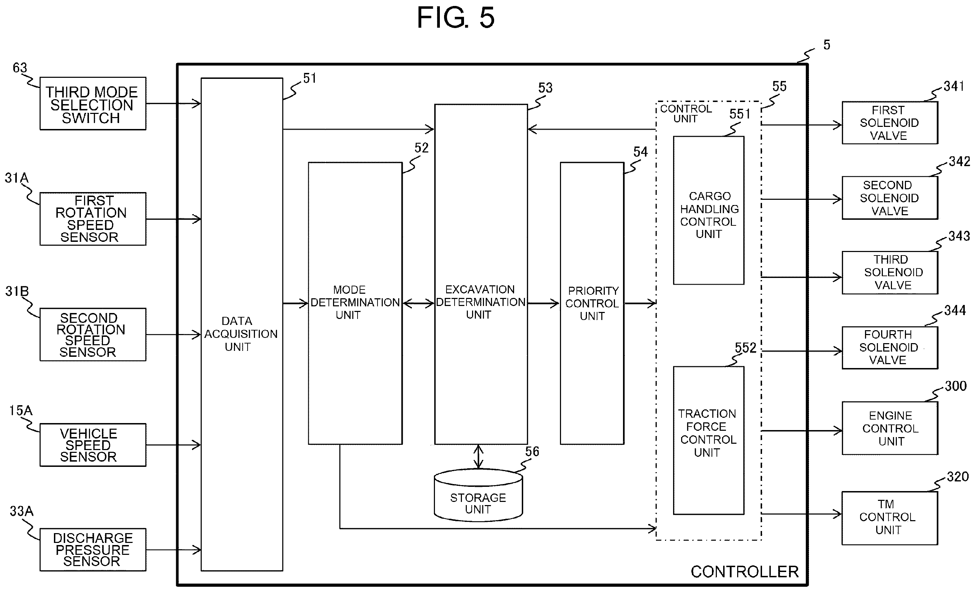

Next, the functional configuration of the controller 5 will be described with reference to FIG. 5.

FIG. 5 is a functional block diagram showing the functions of the controller 5 in the first embodiment.

The controller 5 is configured with a CPU, RAM, ROM, HDD, input I/F, and output I/F connected to each other via a bus. Various operation devices such as control levers 121, 122, forward/reverse switch 41, shift switch 42, and first to third mode selection switches 61 to 63, as well as various sensors such as vehicle speed sensor 15A, discharge pressure sensor 33A, bottom pressure sensor 22A, pedal depression sensor 43A, first rotation speed sensor 31A, and second rotation speed sensor 31B are connected to the input I/F, and the first to fourth solenoid valves 341 to 344, engine control unit 300, and TM control unit 320 are connected to the output I/F.

In such a hardware configuration, the CPU reads the control program (software) stored in a recording medium such as ROM, HDD, or optical disk and deploys it on the RAM. By executing the deployed control program, the control program and hardware work together to realize the functions of the controller 5.

In this embodiment, the controller 5 is described as a computer configured by a combination of software and hardware, but it is not limited to this. For example, as an example of another computer configuration, an integrated circuit that realizes the functions of the control program executed on the side of the wheel loader 1 may be used.

As shown in FIG. 5, the controller 5 includes a data acquisition unit 51, a mode determination unit 52, an excavation determination unit 53, a priority control unit 54, a control unit 55, and a storage unit 56.

The data acquisition unit 51 acquires data related to the mode signal output from the third mode selection switch 63, the input shaft rotation speed RS1 output from the first rotation speed sensor 31A, the output shaft rotation speed RS2 output from the second rotation speed sensor 31B, the discharge pressure Pa output from the discharge pressure sensor 33A, and the vehicle speed S output from the vehicle speed sensor 15A.

The mode determination unit 52 determines whether it is in the semi-automatic excavation mode based on the mode signal acquired by the data acquisition unit 51. Specifically, the mode determination unit 52 determines that the semi-automatic excavation mode is on if the mode signal acquired by the data acquisition unit 51 is related to the heavy excavation mode or light excavation mode. On the other hand, the mode determination unit 52 determines that the semi-automatic excavation mode is off if the mode signal acquired by the data acquisition unit 51 is related to mode off.

In this embodiment, the mode determination unit 52 determines which mode, heavy excavation mode or light excavation mode, is selected on the third mode selection switch 63 based on the mode signal acquired by the data acquisition unit 51.

The excavation determination unit 53 determines whether excavation work has started based on the input shaft rotation speed RS1, output shaft rotation speed RS2, and discharge pressure Pa acquired by the data acquisition unit 51. Here, excavation work is considered to have started when the torque converter speed ratio (RS1/RS2) is less than a predetermined threshold RSth, and the discharge pressure Pa is greater than a predetermined pressure threshold Pth (RS1/RS2<RSth and Pa>Pth).

The predetermined threshold RSth is a threshold related to travel drive when determining the start of excavation and is set based on the maximum torque converter speed ratio that allows excavation. The predetermined pressure threshold Pth is a threshold related to the operation of the cargo handling device 2 when determining the start of excavation and is set based on the minimum discharge pressure of the hydraulic pump 33 required for excavation. Both the predetermined threshold RSth and the predetermined pressure threshold Pth can be arbitrarily changed.

In this embodiment, the discharge pressure of the hydraulic pump 33 is used to determine the start of excavation, but it is not limited to this, and the bottom pressure of the lift arm cylinder 22 may also be used. In this case, excavation work is considered to have started when the torque converter speed ratio (RS1/RS2) is less than a predetermined threshold RSth, and the bottom pressure Pb is greater than a predetermined pressure threshold Pbth (RS1/RS2<RSth and Pa>Pbth).

The excavation determination unit 53 also determines whether excavation work has ended based on the vehicle speed S acquired by the data acquisition unit 51. Here, excavation work is considered to have ended when the vehicle speed S is greater than a predetermined speed threshold Sth (S>St h). The predetermined speed threshold Sth is a value set based on the minimum vehicle speed required for the wheel loader 1 to perform transport work and can be arbitrarily changed.

In this embodiment, vehicle speed is used to determine the end of excavation, but it is not limited to this, and the position of the bucket 23 or the operation of the cargo handling device 2 may also be used. Specifically, the end of excavation may be determined by the bucket 23 operating to the maximum tilt position or by the operation of the cargo handling device 2.

The priority control unit 54 prioritizes control by the semi-automatic excavation mode over control by the travel mode and work mode when it is determined by the mode determination unit 52 that the semi-automatic excavation mode is selected, and the excavation determination unit 53 determines that excavation work has started, i.e., when the semi-automatic excavation mode is selected via the third mode selection switch 63 and excavation work has commenced, making it in the midst of excavation work by the semi-automatic excavation mode, and disables switching from the semi-automatic excavation mode to the normal mode (travel mode and work mode).

In the controller 5, "control by the semi-automatic excavation mode" refers to automatically controlling the operation of the cargo handling device 2 and controlling the engine 30's rotational speed and the transmission 32's gear stage in response to the specific gravity and moisture content of the work object. That is, in this embodiment, "control by the semi-automatic excavation mode" refers to control by either the heavy excavation mode or the light excavation mode within the semi-automatic excavation mode.

Therefore, in the controller 5, when control by the semi-automatic excavation mode is prioritized, even if the data acquisition unit 51 acquires mode signals from the first mode selection switch 61 or the second mode selection switch 62, control by the travel mode and work mode is not executed.

Additionally, the priority control unit 54, when control by the semi-automatic excavation mode is prioritized, will cancel the prioritization of control by the semi-automatic excavation mode and enable switching to the normal mode (travel mode and work mode) if the excavation determination unit 53 determines that the excavation work has ended.

Therefore, in the controller 5, when control by the semi-automatic excavation mode is prioritized, even if the data acquisition unit 51 acquires mode signals from the first mode selection switch 61 or the second mode selection switch 62, control by the travel mode and work mode is not executed.

The control unit 55 includes a cargo handling control unit 551 and a traction force control unit 552.

The cargo handling control unit 551 outputs command signals related to the heavy excavation mode to the first to fourth solenoid valves 341 to 344 when the heavy excavation mode is selected via the third mode selection switch 63. As a result, the cargo handling device 2 automatically performs operations corresponding to heavy excavation, regardless of the operator's manipulation of the control levers 121, 122. Operations corresponding to heavy excavation include, for example, performing the tilt operation of the bucket 23 with a smaller angle (tilt amount) and more frequent, small increments, while slowly performing the lifting operation of the lift arm 21.

The cargo handling control unit 551 outputs command signals related to the light excavation mode to the first to fourth solenoid valves 341 to 344 when the light excavation mode is selected via the third mode selection switch 63. As a result, the cargo handling device 2 automatically performs operations corresponding to light excavation, regardless of the operator's manipulation of the control levers 121, 122. Operations corresponding to light excavation include, for example, performing the tilt operation of the bucket 23 with a larger angle (tilt amount) and less frequently, while quickly performing the lifting operation of the lift arm 21.

In control by the semi-automatic excavation mode, the control of the cargo handling device 2 may be the same in both the heavy excavation mode and the light excavation mode.

The traction force control unit 552 outputs command signals related to the heavy excavation mode (first auto mode + P mode) to the engine control unit 300 and the TM control unit 320 when the heavy excavation mode is selected via the third mode selection switch 63. As a result, the engine 30 has its rotational speed limit turned off, and the transmission 32 automatically shifts down to the first gear stage.

Additionally, the traction force control unit 552 outputs command signals related to the light excavation mode (second auto mode + STD mode) to the engine control unit 300 and the TM control unit 320 when the light excavation mode is selected via the third mode selection switch 63. As a result, the engine 30 has its rotational speed limited, and the transmission 32 automatically shifts down only to the second gear stage.

That is, in this embodiment, the controller 5 switches between the heavy excavation mode and the light excavation mode based on the third mode selection switch 63.

The storage unit 56 is a memory, and this memory stores a predetermined threshold RSth, a predetermined pressure threshold Pth, and a predetermined speed threshold Sth.

### (Control by semi-automatic excavation mode)

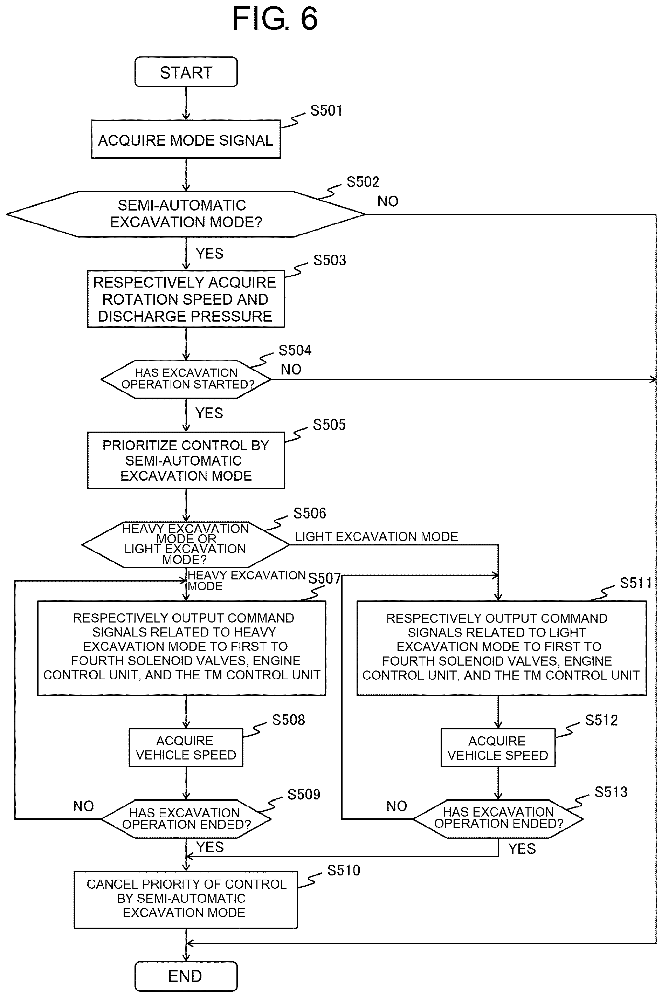

Next, the flow of the control process by the semi-automatic excavation mode executed within the controller 5 will be described with reference to FIG. 6.

FIG. 6 is a flowchart showing the process flow of control by the semi-automatic excavation mode executed by the controller 5 in the first embodiment.

First, the data acquisition unit 51 acquires the mode signal output from the third mode selection switch 63 (step S501). Subsequently, the mode determination unit 52 determines whether it is in the semi-automatic excavation mode, that is, whether the semi-automatic excavation mode is on, based on the mode signal acquired in step S501 (step S502).

If it is determined in step S502 that it is in the semi-automatic excavation mode (step S502/YES), the data acquisition unit 51 acquires the input shaft rotation speed RS1 detected by the first rotation speed sensor 31A, the output shaft rotation speed RS2 detected by the second rotation speed sensor 31B, and the discharge pressure Pa detected by the discharge pressure sensor 33A, respectively (step S503).

Next, the excavation determination unit 53 determines whether the wheel loader 1 has started the excavation operation based on the input shaft rotation speed RS1, output shaft rotation speed RS2, and discharge pressure Pa acquired in step 503 (step S504).

If it is determined in step S504 that the excavation operation has started (step S504/YES), the priority control unit 54 prioritizes control by the semi-automatic excavation mode (step S505).

Next, the mode determination unit 52 determines which mode, heavy excavation mode or light excavation mode, is selected in the third mode selection switch 63 based on the mode signal acquired in step S501 (step S506).

If it is determined in step S506 that the heavy excavation mode is selected (step S506/heavy excavation), the control unit 55 outputs command signals related to the heavy excavation mode to the first to fourth solenoid valves 341 to 344, the engine control unit 300, and the TM control unit 320, respectively (step S507).

Next, the data acquisition unit 51 acquires the vehicle speed S detected by the vehicle speed sensor 15A (step S508). Subsequently, the excavation determination unit 53 determines whether the wheel loader 1 has completed the excavation operation based on the vehicle speed S acquired in step S508 (step S509).

If it is determined in step S509 that the excavation operation has ended (step S509/YES), the priority control unit 54 cancels the priority of control by the semi-automatic excavation mode executed in step S505 (step S510), and the control process by the semi-automatic excavation mode in the controller 5 ends.

On the other hand, if it is determined in step S509 that the excavation operation is ongoing (step S509/NO), the process returns to step S507 and repeats.

Also, if it is determined in step S506 that the light excavation mode is selected (step S506/light excavation), the control unit 55 outputs command signals related to the light excavation mode to the first to fourth solenoid valves 341 to 344, the engine control unit 300, and the TM control unit 320, respectively (step S511).

Next, similar to step S508, the data acquisition unit 51 acquires the vehicle speed S detected by the vehicle speed sensor 15A (step S512). Subsequently, the excavation determination unit 53 determines whether the wheel loader 1 has completed the excavation operation based on the vehicle speed S acquired in step S512 (step S513).

If it is determined in step S513 that the excavation operation has ended (step S513/YES), the process proceeds to step S510, and the control process by the semi-automatic excavation mode in the controller 5 ends.

On the other hand, if it is determined in step S513 that the excavation operation is ongoing (step S513/NO), the process returns to step S511 and repeats the control process.

Note that if it is determined in step S502 that it is not in the semi-automatic excavation mode, that is, the semi-automatic excavation mode is off (step S502/NO), and if it is determined in step S504 that the excavation operation has not started (step S504/NO), the control process by the semi-automatic excavation mode in the controller 5 ends in both cases.

In this way, when the semi-automatic excavation mode is selected in the third mode selection switch 63 and excavation has started, and the wheel loader is in the semi-automatic excavation mode, the controller 5 automatically adjusts the engine speed and the transmission gear stage according to the set mode (heavy excavation mode or light excavation mode) based on the specific gravity and moisture content of the work object.

Specifically, when the heavy excavation mode is set, the traction force of the wheel loader 1 becomes greater than the traction force in the light excavation mode. In other words, when the light excavation mode is set, the traction force of the wheel loader 1 becomes smaller than the traction force in the heavy excavation mode.

As a result, when performing semi-automatic excavation, the wheel loader 1 can maintain a good balance between the traction force and the digging force of the cargo handling device 2 according to the specific gravity (type) and moisture content of the work object, thereby improving the efficiency of the excavation operation.

Also, in this embodiment, when the semi-automatic excavation mode is selected and the excavation operation has started, and the wheel loader is in the semi-automatic excavation mode, the controller 5 prioritizes control by the semi-automatic excavation mode. Therefore, even if the first mode selection switch 61 or the second mode selection switch 62 is operated, it is possible to prevent situations where the engine 30 or transmission 32 suddenly operates according to the travel mode or work mode.

### <Second Embodiment>

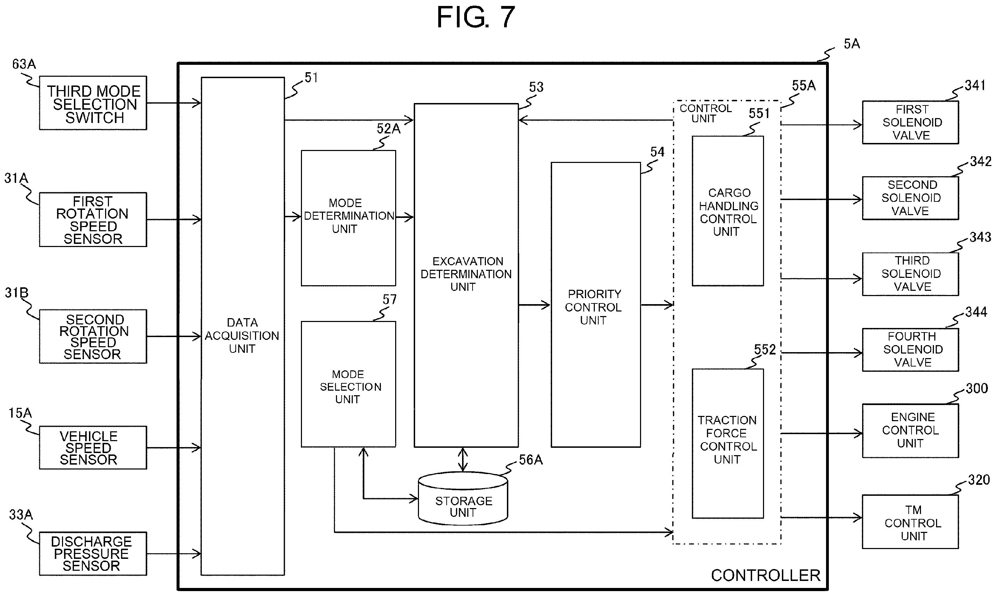

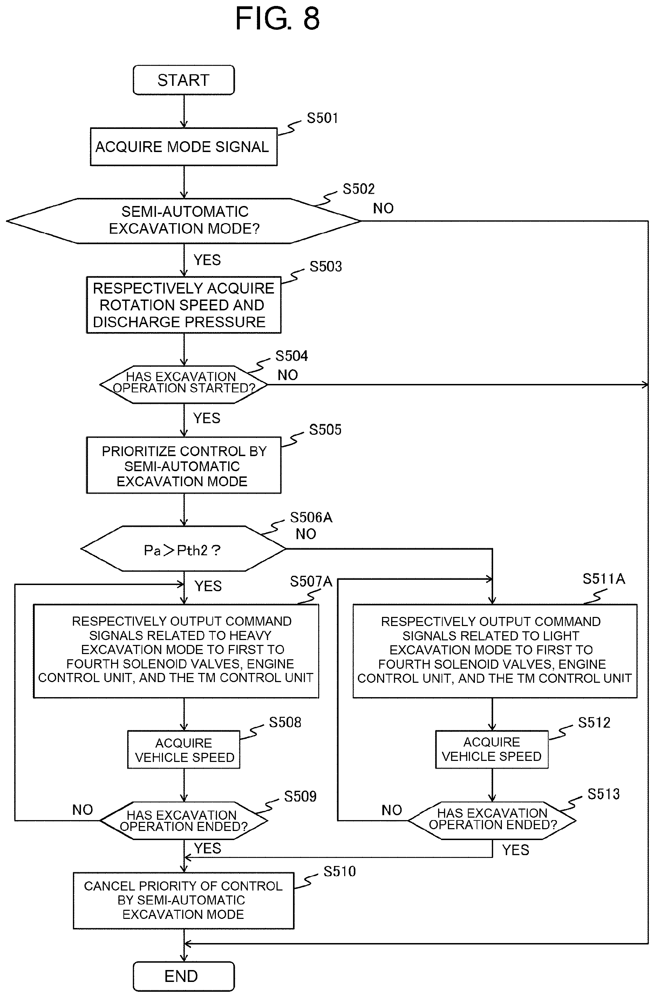

Next, the second embodiment of the present invention will be described with reference to FIGS. 7 and 8. Note that in FIGS. 7 and 8, components common to those described for the wheel loader 1 according to the first embodiment are denoted by the same reference numerals, and their description is omitted. The same applies to the third embodiment described below.

FIG. 7 is a functional block diagram showing the functions of the controller 5A in the second embodiment. FIG. 8 is a flowchart showing the process flow of control by the semi-automatic excavation mode executed by the controller 5A in the second embodiment.

In this embodiment, the third mode selection switch 63A selects only the on/off of the semi-automatic excavation mode, and the selection of the heavy excavation mode and light excavation mode is performed by the controller 5A. Therefore, the mode signal output from the third mode selection switch 63A is a signal related to the on or off of the semi-automatic excavation mode.

As shown in FIG. 7, the controller 5A includes a data acquisition unit 51, a mode determination unit 52A, an excavation determination unit 53, a priority control unit 54, a control unit 55A (cargo handling control unit 551 and traction control unit 552), and a storage unit 56A, in addition to a mode selection unit 57.

The mode selection unit 57 selects the optimal setting mode for the work object from the heavy excavation mode and light excavation mode based on the discharge pressure Pa used in the excavation determination unit 53 to determine the start of the excavation operation, that is, the discharge pressure Pa of the hydraulic pump 33 just before the start of excavation (switching between heavy excavation mode and light excavation mode). Specifically, the mode selection unit 57 determines whether the discharge pressure Pa is greater than a predetermined pressure threshold Pth2.

The predetermined pressure threshold Pth2 is a value set based on the relief pressure of the hydraulic pump 33, for example, 80-90% of the relief pressure. This predetermined pressure threshold Pth2 can be arbitrarily changed and is stored in the storage unit 56A.

The mode selection unit 57 selects the heavy excavation mode if it determines that the discharge pressure Pa is greater than the predetermined pressure threshold Pth2 (Pa>Pth2). On the other hand, the mode selection unit 57 selects the light excavation mode if it determines that the discharge pressure Pa is less than or equal to the predetermined pressure threshold Pth2 (Pa≦Pth2).

Therefore, in this embodiment, the mode determination unit 52A determines only whether the semi-automatic excavation mode is enabled or disabled based on the mode signal acquired by the data acquisition unit 51.

The control unit 55A executes processing according to the setting mode (heavy excavation mode or light excavation mode) selected by the mode selection unit 57 when it is determined in the mode determination unit 52A that it is in the semi-automatic excavation mode and it is determined in the excavation determination unit 53 that the excavation operation has started.

As shown in FIG. 8, when control by the semi-automatic excavation mode is prioritized in step S505, the mode selection unit 57 determines whether the discharge pressure Pa acquired in step S503 is greater than the predetermined pressure threshold Pth2 (step S506A).

If it is determined in step S506A that the delivery pressure Pa is greater than the predetermined pressure threshold Pth2 (Pa>Pth2) (step S506A/YES), the mode selection unit 57 selects the heavy excavation mode. Subsequently, the control unit 55A outputs command signals related to the heavy excavation mode to the first to fourth solenoid valves 341 to 344, the engine control unit 300, and the TM control unit 320, respectively (step S507A), and proceeds to step S508.

If it is determined in step S506A that the delivery pressure Pa is less than the predetermined pressure threshold Pth2 (Pa≦Pth2) (step S506A/YES), the mode selection unit 57 selects the light excavation mode. Subsequently, the control unit 55A outputs command signals related to the light excavation mode to the first to fourth solenoid valves 341 to 344, the engine control unit 300, and the TM control unit 320, respectively (step S507B), and proceeds to step S512.

In this embodiment as well, the same actions and effects as those in the first embodiment can be achieved.

### <Third Embodiment>

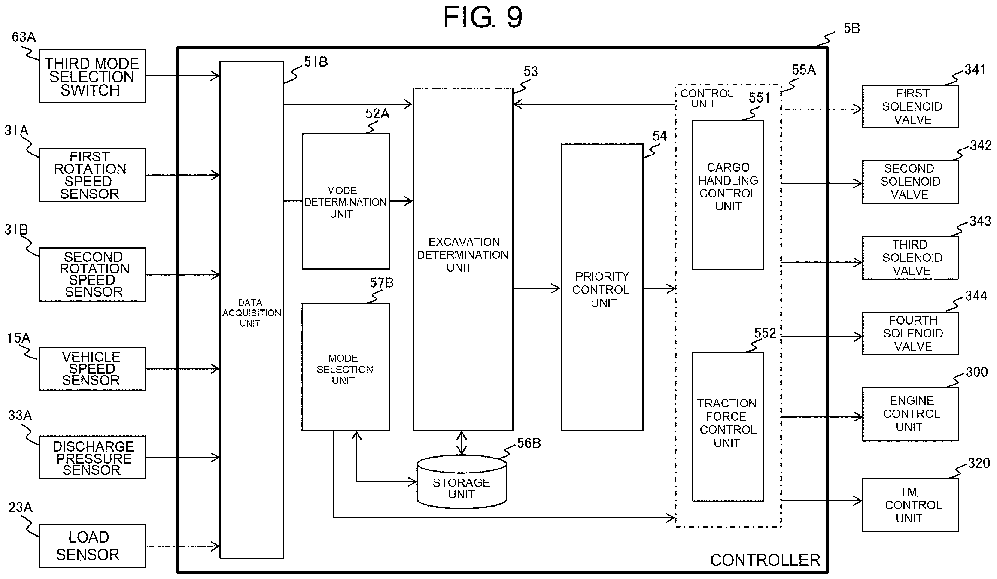

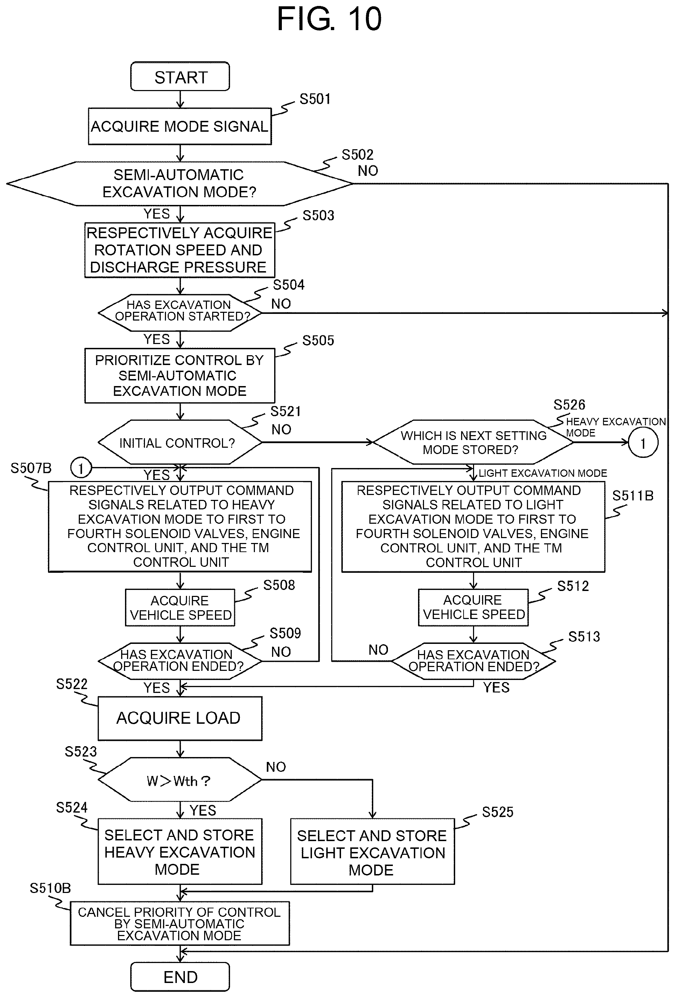

Next, the third embodiment of the present invention will be described with reference to FIGS. 9 and 10.

FIG. 9 is a functional block diagram showing the functions of the controller 5B in the third embodiment. FIG. 10 is a flowchart showing the process flow of control by the semi-automatic excavation mode executed by the controller 5B in the third embodiment.

The controller 5B according to this embodiment, like the controller 5A according to the second embodiment, includes a data acquisition unit 51B, a mode determination unit 52A, an excavation determination unit 53, a priority control unit 54, a control unit 55A (cargo handling control unit 551 and traction force control unit 552), and a storage unit 56B, in addition to a mode selection unit 57B.

However, unlike the mode selection unit 57 in the second embodiment, the mode selection unit 57B selects the optimal setting mode for the work object from the heavy excavation mode and the light excavation mode based on the load W of the load (work object) in the bucket 23. Specifically, the mode selection unit 57B determines whether the load W of the load in the bucket 23 after the completion of excavation is greater than the predetermined load threshold Wth. The load W of the load in the bucket 23 is measured by the load sensor 23A after the completion of excavation, with the lift arm 21 in a raised state.

The predetermined load threshold Wth is a value set based on the rated load for each vehicle class, for example, 80-90% of the rated load. This predetermined load threshold Wth can be arbitrarily changed and is stored in the storage unit 56B.

If the mode selection unit 57B determines that the load W measured by the load sensor 23A is greater than the predetermined load threshold Wth (W>Wth), it selects the heavy excavation mode as the next setting mode. On the other hand, if the mode selection unit 57B determines that the load W measured by the load sensor 23A is less than or equal to the predetermined load threshold Wth (W≦Wth), it selects the light excavation mode as the next setting mode. The next setting mode selected by the mode selection unit 57B is stored in the storage unit 56B.

Also, the mode selection unit 57B selects the heavy excavation mode as the initial setting mode. That is, the controller 5B stores the default setting mode as the heavy excavation mode in the storage unit 56B.

The term "initial" refers to the first time control is performed by the semi-automatic excavation mode after the power of the controller 5B is turned on and it starts up. Therefore, this "initial" does not include the case where the semi-automatic excavation mode is turned off and then turned on again while the controller 5B is in a state of being started up (the power is continuously on).

As shown in FIG. 10, when control by the semi-automatic excavation mode is prioritized in step S505, the controller 5B determines whether the control by the semi-automatic excavation mode is the initial one (step S521).

If it is determined in step S521 that it is the initial control by the semi-automatic excavation mode (step S521/YES), the mode selection unit 57B selects the heavy excavation mode. Subsequently, the control unit 55A outputs command signals related to the heavy excavation mode to the first to fourth solenoid valves 341 to 344, the engine control unit 300, and the TM control unit 320, respectively (step S507B), and proceeds to step S508.

On the other hand, if it is determined in step S521 that the control is not by the initial semi-automatic excavation mode, i.e., it is by the second or subsequent semi-automatic excavation mode (step S521/NO), the controller 5B determines whether the "next setting mode" stored in the storage unit 56B is the heavy excavation mode or the light excavation mode (step S526).

If it is determined in step S526 that the "next setting mode" stored is the heavy excavation mode (step S526/heavy excavation), it proceeds to step S507B.

On the other hand, if it is determined in step S526 that the "next setting mode" stored is the light excavation mode (step S526/light excavation), the mode selection unit 57B selects the light excavation mode. Subsequently, the control unit 55A outputs command signals related to the light excavation mode to the first to fourth solenoid valves 341 to 344, the engine control unit 300, and the TM control unit 320, respectively (step S511B), and proceeds to step S512.

Then, if it is determined in step S509 and step S513 that the excavation completion conditions are met (step S509/YES, step S513/YES), the data acquisition unit 51B acquires the load W measured by the load sensor 23A (step S522).

Next, the mode selection unit 57B determines whether the load W acquired in step S522 is greater than the predetermined load threshold Wth (step S523).

If it is determined in step S523 that the load W is greater than the predetermined load threshold Wth (W>Wth) (step S523/YES), the mode selection unit 57B selects the heavy excavation mode as the next setting mode and outputs it to the storage unit 56B (step S524). As a result, the storage unit 56B stores information indicating that the next setting mode is the heavy excavation mode.

On the other hand, if it is determined in step S523 that the load W is less than or equal to the predetermined load threshold Wth (W≦Wth) (step S523/NO), the mode selection unit 57B selects the light excavation mode as the next setting mode and outputs it to the storage unit 56B (step S525). As a result, the storage unit 56B stores information indicating that the next setting mode is the light excavation mode.

When the next setting mode is selected and stored in the storage unit 56B in step S524 and step S525, the priority control unit 54 cancels the priority of control by the semi-automatic excavation mode (step S510B), and the processing in the controller 5B is completed.

In this embodiment, the mode selection unit 57B selects the next setting mode by comparing the load W with the predetermined load threshold Wth after the data acquisition unit 51B acquires data related to the load W output from the load sensor 23A (step S522). However, this is not limited to this, and the mode selection unit 57B may store the load W acquired in step S522 and compare it with the predetermined load threshold Wth at the next excavation, i.e., in step S526, to select the setting mode.

### In this embodiment as well, similar actions and effects as those in the first embodiment can be achieved.

The embodiments of the present invention have been described above. It should be noted that the present invention is not limited to the above-described embodiments, and various modifications are included. For example, the above-described embodiments have been described in detail to clearly explain the present invention, and are not necessarily limited to those having all the described configurations. In addition, it is possible to replace part of the configuration of each embodiment with the configuration of another embodiment, and it is also possible to add the configuration of another embodiment to the configuration of each embodiment. Furthermore, it is possible to add, delete, or replace part of the configuration of each embodiment with other configurations.

For example, in each of the above embodiments, the wheel loader 1 was equipped with two travel modes and work modes as normal modes, but the normal mode does not necessarily need to have two modes, and there are no particular restrictions on the control content of the travel drive device 3 as long as the control of the operation of the cargo handling device 2 is based on the manipulation amount of the control levers 121, 122.

Also, in each of the above embodiments, the travel drive device 3 was of the torque converter type, but it is not limited to this and may be, for example, of the HST (Hydraulic Static Transmission) type.

Also, in each of the above embodiments, the controllers 5, 5A, 5B set the speed stage of the transmission 32 to the lowest speed stage, which is the first speed stage, in the heavy excavation mode, and set the speed stage of the transmission 32 to be greater than the first speed stage in the light excavation mode, but it is not limited to this, and at least in the heavy excavation mode, the engine speed of the engine 30 is not limited, and in the light excavation mode, the engine speed of the engine 30 is controlled to be limited.

### Reference Signs List

1: Wheel Loader
1A: Front Frame (Body)
1B: Rear Frame (Body)
2: Cargo Handling Device
3: Travel Drive Device
5, 5A, 5B: Controller
11, 11A: Front Wheel (Wheel)
11, 11B: Rear Wheel (Wheel)
30: Engine
31: Torque Converter
32: Transmission
33: Hydraulic Pump
43: Accelerator Pedal (Travel Operation Device)
61-63: First to Third Mode Selection Switch (Mode Selection Device)
121, 122: Control Lever (Cargo Handling Device)

## Claims

1. The wheel loader comprising;
the wheel loader includes a vehicle body, an engine mounted on the vehicle body, a travel drive device driven by the engine to move the vehicle body, a travel operation device for operating the travel drive device, a hydraulic-driven loading work device attached to the vehicle body for excavating work objects, a hydraulic pump driven by the engine to supply hydraulic oil to the drive part of the loading work device, a loading operation device for operating the loading work device, a controller for controlling the engine, the travel drive device, and the loading work device respectively, a mode selection device for selecting a normal mode in which the controller controls the loading work device based on an operation signal output from the loading operation device, and a semi-automatic excavation mode in which the controller automatically controls the travel drive device and the loading work device based on an operation signal output from the travel operation device to assist the operator's operation; wherein
the semi-automatic excavation mode includes a first excavation mode in which the controller does not limit the engine speed, and a second excavation mode in which the controller limits the engine speed so that the traction force by the travel drive device is smaller than in the first excavation mode;
the controller switches between the first excavation mode and the second excavation mode based on the discharge pressure of the hydraulic pump just before the start of the excavation work, when the semi-automatic excavation mode is selected by the mode selection device, or when the semi-automatic excavation mode is selected by the mode selection device.

2. In the wheel loader according to claim 1, wherein
the mode selection device is an input device capable of selecting the first excavation mode and the second excavation mode, and when either of the first excavation mode or the second excavation mode is selected, the semi-automatic excavation mode is selected.

3. In the wheel loader according to claim 1, wherein
the controller selects the first excavation mode when the discharge pressure of the hydraulic pump just before the start of the excavation work is greater than a predetermined pressure threshold, and selects the second excavation mode when the discharge pressure of the hydraulic pump just before the start of the excavation work is equal to or less than the predetermined pressure threshold.

4. In the wheel loader according to claim 1, wherein
the travel drive device includes a torque converter that amplifies the torque transmitted from the engine, and a transmission that can switch between multiple speed stages to transmit the amplified torque output from the torque converter to multiple wheels;
the controller sets the speed stage of the transmission to the lowest speed stage, which is the first speed stage, and does not limit the engine speed in the first excavation mode;
the controller sets the speed stage of the transmission to be greater than the first speed stage and limits the engine speed in the second excavation mode.

5. In the wheel loader according to claim 1, wherein
the controller disables the switch from the semi-automatic excavation mode to the normal mode when the semi-automatic excavation mode is selected by the mode selection device and the excavation work has started and is in progress under the semi-automatic excavation mode;
the controller enables the switch from the semi-automatic excavation mode to the normal mode when the excavation work is completed.
